# EUROPEAN PATENT SPECIFICATION

(11) **EP 1 492 846 B1**
(45) Date of publication and mention of the grant of the patent: **05.07.2006**
(21) Application number: 03719710.0
(22) Date of filing: 10.04.2003
(51) Int. Cl.: C09D 11/10

(54) **VISCOSITY STABILIZING BLEND VEHICLES FOR PREPARING WATER BASED FLEXOGRAPHIC PRINTING INKS**
VISKOSITÄTSSTABILISIERENDE VEHIKELMISCHUNG ZUR HERSTELLUNG VON FLEXODURCKFARBEN AUF WASSERBASIS
MELANGES VEHICULES DE STABILISATION DE VISCOSITE DESTINES A LA PREPARATION D'ENCRES D'IMPRIMERIE FLEXOGRAPHIQUES A BASE D'EAU

(30) Priority: 10.04.2002 US 371461 P
(43) Date of publication of application: 05.01.2005
(73) Proprietor: SUN CHEMICAL CORPORATION, Parsippany, NJ 07054-1285 (US)
(72) Inventor: SPRYCHA, Ryszard, Wallington, NJ 07057 (US); MORA, Leda, Little Ferry, NJ 07643 (US); AUERBACH, Robert, Princeton Junction, NJ 08550 (US); CATENA, Robert, Belleville, NJ 07109 (US)
(74) Representative: Vossius & Partner
(86) International application number: PCT/US2003/011233
(87) International publication number: WO 2003/087239

(56) References cited:
- EP-A- 0 666 281
- US-A- 5 344 872
- US-A- 5 972 088

## Description

This invention relates to the field of printing ink vehicles useful for preparing water based flexographic printing inks. More specifically, the invention relates to improving the long-term storage viscosity stability of such printing inks by use of such vehicles and rheology modifying additives which improve ink gloss and color strength.

Printing inks for flexographic printing systems are well known in the art. In recent years, there has been a steady trend to utilize water based flexographic printing inks to eliminate, or at least minimize, the environmental and health problems associated with the use of volatile organic compounds (VOCs) contained in conventional flexographic printing inks that are released into the pressroom and atmosphere. Although numerous water based printing ink formulations have been developed, these inks have generally exhibited poor long term storage Viscosity stability. Specifically, upon aging, the storage viscosity of such inks increases significantly, up to the point where complete gellation of the ink will occur. This causes severe problems for both printing ink manufacturers and printers utilizing the inks. The problem is particularly severe for printing inks employing yellow, red or orange pigments. Accordingly, there is a need for water based flexographic printing inks, especially those incorporating yellow, red or orange pigments, having good long term storage viscosity stability.

In the field of printing ink, it is also desirable to be able to prepare a variety of water based flexographic inks from a wide range of pigments, in a fast, efficient and economical way. One way to do this is to provide a vehicle (i.e. blend vehicle) for the printing ink that contains substantially all of the components necessary for the final printing ink composition. This would include rheology modifying agents and rub resistance additives. In formulating the printing ink composition in this way the pigment, usually added as a water based pigment dispersion, is all that is required. The pigment or water based pigment dispersion is added to the blend vehicle in a relatively simple, usually single step, mixing process to formulate the printing ink composition. Since the blend vehicle is prepared in a separate step, a generalized blend vehicle for use with a variety of aqueous based pigment dispersions can be prepared in advance and stored. In this way a large number of printing ink compositions can be prepared from a common blend vehicle, with certain other components specific to a particular pigment or aqueous pigment dispersion being added in the mixing step, or adjustments to the composition of certain components of the blend vehicle can be made in the mixing step. Alternatively, custom blend vehicles for use with specific pigments or aqueous based pigment dispersions can be prepared and stored allowing a printing ink of a particular color to be prepared quickly and efficiently using a specially blend vehicle.

We have discovered that the incorporation and use of certain blend vehicles in the preparation of water based flexographic printing inks can greatly improve the long term storage viscosity stability of the ink, especially when the more challenging yellow, red, or orange pigments and aqueous based pigment dispersions are used to formulate the ink. Accordingly, we have developed water based flexographic printing ink compositions which incorporate these blend vehicles. We have also discovered that long-term storage viscosity stability of these inks can be enhanced by the further addition of certain rheology modifiers. As a benefit, we have also discovered that the further addition of these modifiers can have a further beneficial effect on certain other ink properties, which include, but is not limited to, gloss and color strength.

The invention is a long-term storage viscosity stabilizing blend vehicle for use in preparing viscosity stable water based flexographic printing ink compositions made of: (a) a styrenated acrylic polymer having a glass transition temperature (T_{g}) of 48 °C to 52 °C, and an acid number of 65 to 75; (b) an acetylene diol surfactant having an HLB value between 3 and 10; and (c) a silicone based de-foaming agent.

In another aspect, the invention is viscosity stable water based flexographic printing ink compositions prepared using the blend vehicle of the present invention and conventional pigments or water based pigment dispersions used to formulate flexographic printing inks.

The blend vehicles for the water based flexographic printing inks of the present invention incorporate a styrenated acrylic polymer, having a glass transition temperature (T_{g}) of 48 °C to 52°C, and an acid number of 65 to 75. The styrenated polymer is preferably used in an amount from 74 wt. % to 84 wt. %, based on the weight of the blend vehicle.

The blend vehicle also incorporates an acetylene diol surfactant having an HLB value between 3 and 10. The HLB or hydrophilic/lipophilic balance of a surfactant represents the suitability of the surfactant to stabilize an emulsion of either the macroemulsion type (opaque, particle size >400 nm, low stability) and/or the mircoemulsion type (optically clear, thermodynamically stable, particle size <100 nm). An HLB value of 20 is assigned, for example, to nonionic surfactants of the ethoxylate type containing entirely ethylene oxide units and an HLB value of 0 is assigned to completely water insoluble products containing no ethylene oxide fragments. Most HLB values fall between these two numbers. An empirical relationship to arrive at HLB values is [HLB = % of the hydrophilic groups (molar) divided by 5]. The surfactant employed in the present invention serves to enhance the wetting of the pigment by the water by lowering the interfacial tension, facilitate the mechanical process, and stabilize the water based dispersion by controlling the flocculation of particles. A particularly preferred surfactant found to be most suitable in preparing the blend vehicles of the present invention is the nonionic surfactant Surfynol 104 (Surfynol is a registered trademark and product of Air Products Corporation, Allentown, PA) based on a hydrocarbon moiety modified by acetylene chemistry and shows superior performance in water base compositions. The blend vehicle, according to the present invention, may further include a second surfactant, which is different from the acetylene diol surfactant. The acetylene diol surfactant is preferably used in an amount of 0.8 wt.% to 1.2 wt. %, based on the weight of the blend vehicle.

The blend vehicles of the present invention also require the use of a silicone based de-foaming agent, which is preferably used in an amount from 0.15 wt. % to 0.25 wt. %, based on the weight of the blend vehicle. The blend vehicle, according to the present invention, may further include a second de-foaming agent, which is different from the silicone based defoaming agent.

It has been discovered that the use of styrenated acrylic polymers of the above-described type greatly improve the viscosity stability of flexographic printing inks prepared with blend vehicles of the present invention over printing inks formulated with standard or conventional blend vehicles formulated without such component.
In addition, the viscosity stabilizing effect of the blend vehicle preparing the water based flexographic printing ink compositions of the present invention is further improved by incorporating at least one, and preferably a combination of a urea or urea derivative such as urea, methyl urea, or ethyl urea and a polyhydric alcohol (e.g. sorbitol). Each acts as rheology modifiers and, together with the styrenated acrylic polymer, provide a synergistic and unexpected further improvement is viscosity stabilization. The urea, when present, is used in an up to 10 wt. %, based on the weight of the blend vehicle. The polyhydric alcohol or sorbitol, when present, is used in an amount up to 10 wt. % based on the weight of the blend vehicle. This is illustrated in Table 1 below.

A preferred embodiment of the blend vehicle of the present invention would include a wax or wax compound, such as polyethylene wax, which acts to provide rub-resistance to the final printing ink composition. A wax or wax compound, when present, is used in an amount up to 5 wt %, based on the weight of the blend vehicle.

Water based flexographic printing ink compositions prepared according to the present invention are formulated by adding at least one pigment which is typically provided in the form of an aqueous pigment dispersion. The dispersion typically has a solids (pigment) content of 15 wt % to 45 wt. %, based on a total weight of the dispersion. The water content of the printing ink composition of the present invention is derived from the aqueous portion of the styrenated acrylic polymer, or from the aqueous portion of the water based pigment dispersion or both. The amount of water present is up to 20 wt. %, based on the weight of the ink composition.

In formulating water based flexographic printing ink compositions from blend vehicles, according to the present invention, a water based dispersion, in an amount from 35 wt. % to 65 wt. %, based on the weight of the ink composition, is mixed with the blend vehicle. The blend vehicle is added in an amount from 35 wt. % to 65 wt. %, based on the weight of the ink composition. Especially significant increases in long-term viscosity stability have been achieved by the blend vehicles present invention when used to formulate water based flexographic printing inks employing yellow, red and orange pigments and aqueous based pigment dispersions.

**Table 1 Flexographic Inks made from Various Blend Vehicles**

| | Standard (Example 4) | Example 5 | Example 6 (w/ Urea) | Example 7 (w/ sorbitol) |
|---|---|---|---|---|
| Viscosity Initial (#3 Signature Cup) | 45 | 29 | 18 | 17 |
| Viscosity 7 days (#3 Signature cup) | 180 | 65 | 48 | 39 |
| Gloss (SBS) | 54 | 70 | 70 | 69 |
| Gloss (Kemiart Lite) | 19 | 26 | 27 | 26 |
| Color Strength (SBS) | Standard | Stronger | Stronger | Stronger |

Other aqueous pigment dispersions suitable for use in preparing water based flexographic printing ink compositions from the blend vehicles of the present invention are set forth below in the Table 2.

**Table 2**

| Base | Pigment | Color | Color Index | Manufacturer |
|---|---|---|---|---|
| PMA140 | White | White | PW 6 | Sun Chemical |
| PMA220 | AAOT Yellow | Yellow | PY 14 | Sun Chemical |
| PMA221 | AAOT Yellow | Yellow | PY 14 | Sun Chemical |
| PMA222 | Yellow | Yellow | PY 3 | Sun Chemical |
| PMA320 | Orange | Orange | PO 5 | Sun Chemical |
| PMA324 | Orange | Orange | PO 16 | Heucotech |
| PMA325 | Orange | Orange | PO 16 | Drew |
| PMA400 | Lithol | Red | PR 49:1 | Sun Chemical |
| PMA405 | Lithol | Red | PR 49:2 | Sun Chemical |
| PMA460 | Clarion | Orange | PO 46 | Sun Chemical |
| PMA462 | Naphthol | Red | PR 2 | Heucotech |
| PMA464 | Naphthol | Red | PR 23 | Heucotech |
| PMA466 | Rubine | Red | PR 57:1 | Heucotech |
| PMA466 | Rubine | Red | PR 57:1 | Sun Chemical |
| PMA467 | Rubine | Red | PR 57:1 | Sun Chemical |
| PMA468 | Rhodamine | Purple | PP 169 | Heucotech |
| PMA469 | Rhodamine | Violet | PV1 | Heucotech |
| PMA525 | Blue | Blue | PB 15:3 | Sun Chemical |
| PMA526 | Blue | Blue | PB 15:3 | Sun Chemical |
| PMA530 | Blue | Blue | PB 16 | Heucotech |
| PMA542 | Blue | Blue | PB 61 | Heucotech |
| PMA600 | Violet | Violet | PV 27 | Heucotech |
| PMA602 | Violet | Violet | PV 23 | Sun Chemical |
| PMA604 | Violet | Violet | PV 3 | Sun Chemical |
| PMA720 | Green | Green | PG 7 | Sun Chemical |
| PMA900 | Black | Black | PB 7 | Sun Chemical |
| PMA950 | Black | Black | PB 7 | Sun Chemical |
| PMA980 | Black | Black | PB 7 | Sun Chemical |
| PMA990 | Black | Black | PB 7 | Sun Chemical |

In addition, other pigments and pigment dispersions that can be used to prepare water based flexographic printing ink compositions according to the present invention include: red dispersions such as RCD-9572 Lithol Rubine and RS-8135 Naphthol Y/S, manufactured by Sun Chemical Corporation, Fort Lee, New Jersey; orange dispersions, such as OS-8088 Orange, manufactured by Sun Chemical Corporation; and white dispersions such as PMA 140, manufactured by Sun Chemical Corporation.

The pigment colorant portion of the aqueous based pigment dispersions to be mixed with the blend vehicle of the present invention, may be used individually or in combination with other pigments. The pigment may be in the form of a presscake, dry power, or a flush. Examples of suitable pigments are described or referenced herein by their Color Index No. and include: PY 14 (AAOT Yellow), PO 16 (Dianisdine Orange), PR 23 (BS Naphthol), PR 57:1, HS Lithol Rubine, PB 15:3 (Phthalo Blue), and PV 23 (Carbazole Violet)

It will be readily understood by persons of ordinary skill in the art that according to the present invention, it is usually preferable to prepare a separate blend vehicle for subsequent use in preparing water-based ink compositions having improved viscosity-stability, the present invention also encompasses the preparation of final water-based ink compositions, having all of the recited components, directly from the components, without the separate preparation of the blend vehicle.

The preparation of blend vehicles and water based flexographic printing ink compositions according to the present invention are set forth in the Examples below. In the following examples, any "parts" or ratios are based on weight unless otherwise indicated.

### Example 1 (Comparative Standard Vehicle)

An acrylic polymer (84 parts of Lucidene 612, "Lucidene" being a trademark of Rohm & Haas of Philadelphia, PA) was added to a polyethylene wax additive (5 parts of 59K-21 PE, a commercially available product of Sun Chemical), an acetylene diol surfactant (2 parts of Ex 649-68 from Sun Chemical) and a defoamer (1.2 parts of DeeFo 3010E/50, "Dee Fo" being a trademark of Ultra Additives, Inc of Paterson, NJ) with the balance of the formulation being water. The blend vehicle thus formed had a pH of 9.1.

The initial bulk viscosity of the blend vehicle and printing inks of the present invention were measured by measuring the amount of time in seconds necessary for the blend vehicle to completely flow out of the indicated #2 Signature Cup. According to the above measurement, the blend vehicle had a measured bulk viscosity of 36 seconds.

### Example 2

To a styrenated acrylic polymer (84 parts of Parachem RLS-B62) was added a polyethylene wax additive (5 parts of 59K-21 PE), an acetylene diol surfactant (1 parts of Surfynol 104H of Air Products) and a defoamer (0.2 parts of DeeFo PI-40 by Ultra) with the balance of the formulation being water (9.8 parts). The blend vehicle thus formed had a pH of 9.1. According to the above method of measuring bulk viscosity, the blend vehicle had a viscosity of 45 seconds.

### Example 3 (w/ urea and sorbitol)

To a styrenated acrylic polymer (74 parts of Parachem RLS-B62) was added a polyethylene wax additive (5 parts of 59K-21 PE), an acetylene diol surfactant (1 parts of Surfynol 104H of Air Products), a defoamer (0.2 parts of DeeFo PI-40 by Ultra), urea (10 parts) and sorbitol (5 parts) with the balance of the formulation being water (4.8 parts). The blend vehicle thus formed had a pH of 9.1. According to the above method of measuring bulk viscosity, the blend vehicle had a viscosity of 20 seconds.

### Example 4

To the blend vehicle of Example 1 (40.0parts) was added a naphthol red pigment base (5.6 parts), an orange pigment base (53.4 parts) and glycol ether (1.00 part). The viscosity of the resulting ink composition was 45 while the ink was fresh (measured with a #3 Signature cup). The gloss was measured on the SBS substrate and was 54, and on the Kemiart-Lite as 19. The color strength was measured visually on the SBS and rated as standard.

The viscosity stability of the ink composition was measured as follows: 100 grams of the ink is placed in a 4 ounce jar and the lid is closed. The jar containing ink is then placed in an oven at 50 °C. After 7 days the ink is removed from the oven, allowed to come to room temperature and checked for flotation and settling. It is then mixed for 5 minutes and rechecked for viscosity. The viscosity of the ink composition of Example 3 after being aged seven days at 50 °C was 180.

### Example 5

To the blend vehicle of Example 2 (40.0 parts) was added a naphthol red pigment base (5.6 parts), an orange pigment base (53.4 parts) and glycol ether (1.00 part). The viscosity of the resulting ink composition was 29 while the ink was fresh (measured with a #3 Signature cup). The gloss was measured on SBS substrate and was 54, and on Kemiart-Lite substrate and was 19. The color strength was measured on the SBS substrate and was rated visually as stronger than the ink made with the standard. The viscosity of the ink composition of Example 3 after being aged seven days at 50 °C was 65.

### Example 6 (w/ urea)

To the ink composition of Example 4 was added urea (5 parts by weight). The viscosity of the fresh ink was 18, the SBS gloss was 70, the Kemiart-Lite gloss was 27, and the color strength on SBS was stronger. The viscosity of the ink after being aged five days at 50 °C was 48.

### Example 7 (w/ sorbitol)

To the ink composition of Example 4 was added sorbitol (5 parts by weight). The viscosity of the fresh ink was 17, the SBS gloss was 69, the Kemiart-Lite gloss was 26, and the color strength on SBS was stronger. The viscosity of the ink after being aged five days at 50 °C was 39.

### Example 8

To the blend vehicle of Example 1 (63.0 parts) was added a phthalo blue pigment base (24 parts), a lithol rubine base (3.5 parts), a black pigment base (1.5 parts) and a white pigment base (8.0 parts). The viscosity of the resulting ink composition was 37 while the ink was fresh (measured with a #2 Signature cup). The viscosity after the ink was aged at 50°C for 7 days was 60.

### Example 9

To the blend vehicle of Example 2 (60.0 parts) was added a phthalo blue pigment base (23 parts), a lithol rubine base (3.0 parts), a black pigment base (1.4 parts) and a white pigment base (7.6 parts). The viscosity of the resulting ink composition was 30 while the ink was fresh (measured with a #2 Signature cup). The viscosity after the ink was aged at 50°C for 7 days was 33.

### Example 10

To the blend vehicle of Example 1 (35.05 parts) was added a lithol rubine pigment base (32 parts), a naphthol pigment base (13.65 parts), an orange pigment base (14.3 parts) and a white pigment base (5.0 parts). The viscosity of the resulting ink composition was 38 while the ink was fresh (measured with a #2 Signature cup). The gloss was measured on SBS substrate and was 48 and on the Kemiart-Lite as 33. The color strength was measured visually on the SBS and rated as standard.

### Example 11 (w/ urea and sorbitol)

To the blend vehicle of Example 3 (35.05 parts) was added a lithol rubine pigment base (32 parts), a naphthol pigment base (13.65 parts), an orange pigment base (14.3 parts) and a white pigment base (5.0 parts). The viscosity of the resulting ink composition was 28 while the ink was fresh (measured with a #2 Signature cup). The gloss was measured on SBS substrate and was 54 and on the Kemiart-Lite as 36. The color strength was measured visually on the SBS and rated as stronger.

### Example 12

To the blend vehicle of Example 1 (35.05 parts) was added a lithol rubine pigment base (32 parts), a naphthol pigment base (13.65 parts), an orange pigment base (14.3 parts) and a white pigment base (5.0 parts). The viscosity of the resulting ink composition was 41 while the ink was fresh (measured with a #2 Signature cup). The ink was aged for 5 days at 50°C and the resulting viscosity was 115.

### Example 13 (w/ urea)

To the blend vehicle of Example 1 (35.05 parts) was added a lithol rubine pigment base (32 parts), a naphthol pigment base (13.65 parts), an orange pigment base (14.3 parts), a white pigment base (5.0 parts), and urea (5 parts). The viscosity of the resulting ink composition was 21 while the ink was fresh (measured with a #2 Signature cup). The ink was aged for 5 days at 50°C and the resulting viscosity was 75.

### Example 14 (Comparative Standard Vehicle w/ sorbitol)

To the blend vehicle of Example 1 (35.05 parts) was added a lithol rubine pigment base (32 parts), a naphthol pigment base (13.65 parts), an orange pigment base (14.3 parts), a white pigment base (5.0 parts), and sorbitol (5 parts). The viscosity of the resulting ink composition was 22 while the ink was fresh (measured with a #2 Signature cup). The ink was aged for 5 days at 50°C and the resulting viscosity was 90.

### Example 15 (Comparative Standard Vehicle)

To the blend vehicle of Example 1 (48.5 parts) was added a phthalo blue pigment base (17.3 parts), a yellow pigment base (21.0 parts), a black pigment base (2.8 parts) and a white pigment base (10.4 parts). The viscosity of the resulting ink composition was 47 while the ink was fresh (measured with a #2 Signature cup). The viscosity after the ink was aged at 50°C for 7 days was 90.

### Example 16

To the blend vehicle of Example 2 (46.2 parts) was added a phthalo blue pigment base (16.4 parts), a yellow pigment base (20.0 parts), a black pigment base (2.6 parts) and a white pigment base (9.8 parts). The viscosity of the resulting ink composition was 35 while the ink was fresh (measured with a #2 Signature cup). The viscosity after the ink was aged at 50°C for 7 days was 45.

### Example 17 (Comparative Standard Vehicle)

To the blend vehicle of Example 1 (60.0 parts) was added a yellow pigment base (40.0 parts). The viscosity of the resulting ink composition was 47 while the ink was fresh (measured with a #2 Signature cup). The viscosity after the ink was aged at 50°C for 7 days was 204.

### Example 18 (w/ urea)

To the blend vehicle of Example 2 (57.0 parts) was added a yellow pigment base (38.0 parts) and urea (5.0 parts). The viscosity of the resulting ink composition was 35 while the ink was fresh (measured with a #2 Signature cup). The viscosity after the ink was aged at 50°C for 7 days was 59.

The scope of the invention is established by the following set of claims. Unless otherwise noted, all percentages, ratios and parts provided herein are based on weight or weight percent (wt. %) and are based on the weight of either the blend vehicle or the printing ink composition.

## Claims

1. A viscosity stabilizing blend vehicle for use in preparing water based flexographic printing inks, said vehicle comprising:
a. a styrenated acrylic polymer having a glass transition temperature (Tg) of 48 °C to 52 °C, and an acid number of 65 to 75;
b. an acetylene diol surfactant having an HLB value between 3 and 10; and
c. a silicone based de-foaming agent.

2. The blend vehicle of claim 1 wherein the styrenated acrylic polymer is in the form of an emulsion.

3. The blend vehicle of claim 1 having about 74 wt. % to about 84 wt. % styrenated acrylic polymer, 0.8 wt. % to 1.2 wt. % acetylene diol surfactant; 0.15 wt. % to 25 wt. % silicone based de-foaming; and up to 0.25 wt. % water.

4. The blend vehicle of any one of claims 1 to 3 further comprising a polyethylene wax.

5. The blend vehicle of claim 4 wherein the polyethylene wax is selected from micronized polyethylene waxes and combinations thereof.

6. The blend vehicle of claim 4 or 5 having from 4.5 wt. % to 5.5 wt. % polyethylene wax.

7. The blend vehicle of any one of claims 1 to 6 further comprising urea or a urea derivative.

8. The blend vehicle of claim 7 wherein the urea or urea derivative is selected from the group consisting of urea, methyl urea, or ethyl urea.

9. The blend vehicle of claim 7 or 8 having up to 10 wt. % urea or urea derivative.

10. The blend vehicle of any one of claims 1 to 9 further comprising a polyhydric alcohol.

11. The blend vehicle of claim 10 wherein the polyhydric alcohol is sorbitol.

12. The blend vehicle of claim 10 or 11 having up to 10 wt. % sorbitol.

13. A viscosity stabilized water based flexographic printing ink composition comprising:
a viscosity stabilizing blend vehicle as defined in any one of claims 1 to 12 in combination with at least one aqueous based pigment dispersion.

14. The ink composition of claim 13 having 35 wt. % to 65 wt. % blend vehicle and 35 wt. % to 65 wt. % aqueous based pigment dispersion.

15. The ink composition of claim 13 or 14, wherein the pigment colorant portion of the aqueous based pigment dispersion is selected from the group consisting of : PW 6, PY 14, PY 3, PO 5, PO 16, PR 49:1, PR 49:2, PO 46, PR 2, PR 23, PR 57:1, PP 169, PV 1, PB 15:3, PB 16, PB 61, PV 27, PV 23, PV 3, PG 7, PB 7, and combinations thereof.

16. The ink composition of any one of claims 13 to 15 wherein the pigment colorant portion of the aqueous based pigment dispersion is in the form of a presscake, a dry power, or a flush.

17. The ink composition of claim 13 wherein the water based pigment dispersion is selected from the group consisting of: PMA140, PMA220, PMA221, PMA22, PMA320, PMA400, PMA405, PMA460, PMA466, PMA467, PMA525, PMA526, PMA602, PMA604, PMA720, PMA900, PMA950, PMA980, PMA990, PMA325, PMA324, PMA462, PMA464, PMA466, PMA468, PMA469, PMA530, PMA542, PMA600 and combinations thereof.

18. A viscosity stabilized water based flexographic printing ink composition according to claim 13 comprising:
a viscosity stabilizing blend vehicle made of :
I RLS-B62 styrenated acrylic polymer,
II Surfynol 104H acetylene diol surfactant,
III Dee Fo PI-40 silicone based defoaming agent,
IV sorbitol, and
V urea;
in combination with at least one aqueous based pigment dispersion.

## Patentansprüche

1. Viskositätsstabilisierende Vehikelmischung zur Verwendung bei der Herstellung von Flexodruckfarben auf Wasserbasis, wobei das Vehikel umfasst:
a. ein styrenisiertes Acrylpolymer mit einer Glasübergangstemperatur (Tg) von 48 °C bis 52 °C und einer Säurezahl von 65 bis 75;
b. ein grenzflächenaktives Mittel aus Acetylendiol mit einem HLB Wert zwischen 3 und 10; und
c. ein Entschäumungsmittel auf Silikonbasis.

2. Vehikelmischung gemäß Anspruch 1, wobei das styrenisierte Acrylpolymer die Form einer Emulsion aufweist.

3. Vehikelmischung gemäß Anspruch 1, mit etwa 74 Gew.% bis etwa 84 Gew.% styrenisiertem Acrylpolymer, 0,8 Gew.% bis etwa 1,2 Gew.% grenzflächenaktivem Mittel aus Acetylendiol; 0,15 Gew.% bis 25 Gew.% Entschäumungsmittel auf Silikonbasis; und bis zu 0,25 Gew.% Wasser.

4. Vehikelmischung gemäß einem der Ansprüche 1-3, weiterhin umfassend ein Polyethylenwachs.

5. Vehikelmischung gemäß Anspruch 4, wobei das Polyethylenwachs aus mikronisierten Polyethylenwachsen und Kombinationen davon ausgewählt ist.

6. Vehikelmischung gemäß Anspruch 4 oder 5 mit 4,5 Gew.% bis 5,5 Gew.% Polyethylenwachs.

7. Vehikelmischung gemäß einem der Ansprüche 1-6, weiterhin umfassend Harnstoff oder ein Harnstoffderivat.

8. Vehikelmischung gemäß Anspruch 7, wobei der Harnstoff oder das Harnstoffderivat aus Harnstoff, Methylharnstoff oder Ethylharnstoff ausgewählt sind.

9. Vehikelmischung gemäß Anspruch 7 oder 8 mit bis zu 10 Gew.% Harnstoff oder Harnstoffderivat.

10. Vehikelmischung gemäß einem der Ansprüche 1-9, weiterhin umfassend einen mehrwertigen Alkohol.

11. Vehikelmischung gemäß Anspruch 10, wobei der mehrwertige Alkohol Sorbitol ist.

12. Vehikelmischung gemäß Anspruch 10 oder 11 mit bis zu 10 Gew.% Sorbitol.

13. Viskositätsstabilisierte Flexodruckfarbenzusammensetzung auf Wasserbasis, umfassend:
eine wie in einem der Ansprüche 1-12 definierte viskositätsstabilisierende Vehikelmischung in Kombination mit mindestens einer Pigmentdispersion auf Wasserbasis.

14. Druckfarbenzusammensetzung gemäß Anspruch 13 mit 35 Gew.% bis 65 Gew.% Vehikelmischung und 35 Gew.% bis 65 Gew.% Pigmentdispersion auf Wasserbasis.

15. Druckfarbenzusammensetzung gemäß Anspruch 13 oder 14, wobei der Farbpigmentteil der Pigmentdispersion auf Wasserbasis ausgewählt ist aus: PW 6, PY 14, PY 3, PO 5, PO 16, PR 49:1, PR 49:2, PO 46, PR 2, PR 23, PR 57:1, PP 169, PV 1, PB 15:3, PB 16, PB 61, PV 27, PV 23, PV 3, PG 7, PB 7 und Kombinationen davon.

16. Druckfarbenzusammensetzung gemäß einem der Ansprüche 13-15, wobei der Farbpigmentteil der Pigmentdispersion auf Wasserbasis die Form eines Presskuchens, eines trockenen Pulvers oder einer Flushpaste aufweist.

17. Druckfarbenzusammensetzung gemäß Anspruch 13, wobei die Pigmentdispersion auf Wasserbasis ausgewählt ist aus: PMA140, PMA220, PMA221, PMA22, PMA320, PMA400, PMA405, PMA460, PMA466, PMA467, PMA525, PMA526, PMA602, PMA604, PMA720, PMA900, PMA950, PMA980, PMA990, PMA325, PMA324, PMA462, PMA464, PMA466, PMA468, PMA469, PMA530, PMA542, PMA600 und Kombinationen davon.

18. Viskositätsstabilisierte Flexodruckfarbenzusammensetzung auf Wasserbasis gemäß Anspruch 13, umfassend:
eine viskositätsstabilisierende Vehikelmischung, hergestellt aus:
I styrenisiertem Acrylpolymer RLS-B62,
II grenzflächenaktivem Mittel aus Acetylendiol-Surfynol 104H,
III Entschäumungsmittel auf Silikonbasis Dee Fo P1-40,
IV Sorbitol, und
V Harnstoff;
in Kombination mit mindestens einer Pigmentdispersion auf Wasserbasis.

## Revendications

1. Véhicule de mélange de stabilisation de viscosité pour une utilisation dans la préparation des encres d'impression flexographique à base d'eau, ledit véhicule comprenant :
a. un polymère acrylique styréné ayant une température de transition vitreuse (Tg) de 48 °C à 52 °C, et un indice d'acidité de 65 à 75 ;
b. un agent tensioactif acétylène diol ayant une valeur HLB entre 3 et 10 ; et
c. un agent anti-mousse à base de silicone.

2. Véhicule de mélange selon la revendication 1, dans lequel le polymère acrylique styréné est sous la forme d'une émulsion.

3. Véhicule de mélange selon la revendication 1, ayant environ 74 % en poids à 84 % en poids de polymère acrylique styréné ; 0,8 % en poids à 1,2 % en poids d'agent tensioactif acétylène diol ; 0,15% en poids à 25 % en poids d'agent anti-mousse à base de silicone ; et jusqu'à 0,25 % en poids d'eau.

4. Véhicule de mélange selon l'une quelconque des revendications 1 à 3 comprenant en outre une cire de polyéthylène.

5. Véhicule de mélange selon la revendication 4, dans lequel la cire de polyéthylène est choisie parmi les cires de polyéthylène micronisées et des combinaisons de celles-ci.

6. Véhicule de mélange selon la revendication 4 ou 5, ayant de 4,5 % en poids à 5,5 % en poids de cire de polyéthylène.

7. Véhicule de mélange selon l'une quelconque des revendications 1 à 6 comprenant en outre de l'urée ou un dérivé d'urée.

8. Véhicule de mélange selon la revendication 7, dans lequel l'urée ou le dérivé d'urée est choisi dans le groupe consistant en l'urée, la méthylurée, ou l'éthylurée.

9. Véhicule de mélange selon la revendication 7 ou 8, ayant jusqu'à 10 % en poids d'urée ou de dérivé d'urée.

10. Véhicule de mélange selon l'une quelconque des revendications 1 à 9, comprenant en outre un polyalcool.

11. Véhicule de mélange selon la revendication 10, dans lequel le polyalcool est le sorbitol.

12. Véhicule de mélange selon la revendication 10 ou 11, ayant jusqu'à 10 % en poids de sorbitol.

13. Composition d'encre d'impression flexographique à base d'eau stabilisée en viscosité comprenant :
un véhicule de mélange de stabilisation de viscosité selon l'une quelconque des revendications 1 à 12, en combinaison avec au moins une dispersion de pigment à base aqueuse.

14. Composition d'encre selon la revendication 13, ayant 35 % en poids à 65 % en poids de véhicule de mélange et 35 % en poids à 65 % en poids de dispersion de pigment à base aqueuse.

15. Composition d'encre selon la revendication 13 ou 14, dans laquelle la portion colorante de pigment de la dispersion de pigment à base aqueuse est choisie dans le groupe consistant en : PW 6, PY 14, PY 3, PO 5, PO 16, PR 49:1, PR 49:2, PO 46, PR 2, PR 23, PR 57:1, PP 169, PV 1, PB 15:3, PB 16, PB 61, PV 27, PV 23, PV 3, PG 7, PB 7 et des combinaisons de ceux-ci.

16. Composition d'encre selon l'une quelconque des revendications 13 à 15, dans laquelle la portion colorante de pigment de la dispersion de pigment à base aqueuse est sous la forme d'un gâteau de filtre-presse, d'une puissance sans injection d'eau, ou d'une pousse.

17. Composition d'encre selon la revendication 13, dans laquelle la dispersion de pigment à base d'eau est choisie dans le groupe consistant en : PMA 140, PMA 220, PMA 221, PMA 22, PMA 320, PMA 400, PMA 405, PMA 460, PMA 466, PMA 467, PMA 525, PMA 526, PMA 602, PMA 604, PMA 720, PMA 900, PMA 950, PMA 980, PMA 990, PMA 325, PMA 324, PMA 462, PMA 464, PMA 466, PMA 468, PMA 469, PMA 530, PMA 542, PMA 600 et des combinaisons de ceux-ci.

18. Composition d'encre d'impression flexographique à base d'eau stabilisée en viscosité selon la revendication 13 comprenant :
un véhicule de mélange de stabilisation de viscosité constitué :
I d'un polymère acrylique styréné RLS-B62,
II d'un agent tensioactif acétylène diol Surfynol 104H,
III d'un agent anti-mousse à base de silicone Dee Fo PI-40,
IV de sorbitol, et
V d'urée ;
en combinaison avec au moins une dispersion de pigment à base aqueuse.
